(19) Europäisches Patentamt
European Patent Office
Office européen des brevets

(11) EP 3 374 195 B1

(12) **EUROPÄISCHE PATENTSCHRIFT**

(45) Veröffentlichungstag und Bekanntmachung des Hinweises auf die Patenterteilung:
**07.10.2020 Patentblatt 2020/41**

(21) Anmeldenummer: **16793886.9**

(22) Anmeldetag: **09.11.2016**

(51) Int Cl.:
***B41M 5/333*** *(2006.01)* ***B41M 5/337*** *(2006.01)*
***B41M 5/327*** *(2006.01)*

(86) Internationale Anmeldenummer:
**PCT/EP2016/077088**

(87) Internationale Veröffentlichungsnummer:
**WO 2017/081064 (18.05.2017 Gazette 2017/20)**

(54) **WÄRMEEMPFINDLICHES AUFZEICHNUNGSMATERIAL**

HEAT-SENSITIVE RECORDING MATERIAL

MATÉRIAU D'ENREGISTREMENT THERMOSENSIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.11.2015 DE 102015119428**

(43) Veröffentlichungstag der Anmeldung:
**19.09.2018 Patentblatt 2018/38**

(73) Patentinhaber: **Papierfabrik August Koehler SE**
**77704 Oberkirch (DE)**

(72) Erfinder:
- **HORN, Michael**
  **77654 Offenburg (DE)**
- **KESKE, Jürgen**
  **Neuried 77743 (DE)**
- **FRITZ, Dietmar**
  **77704 Oberkirch (DE)**

(74) Vertreter: **Held, Stephan**
**Meissner Bolte Patentanwälte**
**Rechtsanwälte Partnerschaft mbB**
**Widenmayerstraße 47**
**80538 München (DE)**

(56) Entgegenhaltungen:
**EP-A1- 1 382 459** **EP-A1- 2 910 384**
**JP-B2- 3 495 138** **JP-B2- 3 495 138**
**US-A- 4 996 183**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein wärmeempfindliches Aufzeichnungsmaterial, umfassend ein Trägersubstrat und mindestens eine auf mindestens einer Seite des Trägersubstrats aufgebrachte wärmeempfindliche Thermoreaktionsschicht, die einen Farbbildner und einen Farbentwickler, die bei Wärmeeinwirkung unter Farbentwicklung miteinander reagieren, sowie ein Schmelzhilfsmittel enthält, sowie ein Verfahren zum Aufbringen einer wärmempfindlichen Thermoreaktionsschicht auf ein Substrat, d.h. die Herstellung eines solchen wärmeempfindlichen Aufzeichnungsmaterials.

Wärmeempfindliche Aufzeichnungsmaterialien für thermo-direkt Druckanwendungen mit einer auf einem Trägersubstrat aufgebrachten wärmempfindlichen Thermoreaktionsschicht sind seit langem bekannt. Die wärmeempfindliche Thermoreaktionsschicht enthält üblicherweise einen Farbbildner, einen Farbentwickler sowie gegebenenfalls weitere Additive.

Bekannt ist auch der Einsatz von Gallussäure-Derivaten als Farbentwickler und Leuko-Farbstoffen als Farbstoffvorläufer in der wärmeempfindlichen Thermoreaktionsschicht.

Derartige Aufzeichnungsmaterialien wurden entwickelt, um die Ansprechempfindlichkeit im Thermodrucker, auch ohne Zuhilfenahme von Schmelzhilfsmitteln (sogenannten Sensitizern oder thermischen Lösemitteln), zu verbessern (JP 1984-022795), die Beständigkeit des Schriftbildes zu steigern (JP 1982-176196), insbesondere wenn das bedruckte Aufzeichnungsmaterial in Berührung mit hydrophoben Stoffen, wie weichmacherhaltigen Materialien oder Ölen, kommt (JP 1985-032697, JP 04-307290).

Manchmal werden diese wünschenswerten Eigenschaften nur durch die Verwendung von speziellen Schmelzhilfsmitteln, wie Di-arylcarbonaten (JP 1987-261479), Oxalsäureestern (JP 1992-062088), oder von Alterungsschutzmitteln (JP 2005-088458) in Kombination mit Gallussäure-Derivaten erreicht.

Auch der Einsatz von Kombinationen von Gallussäure-Estern mit MilchsäureOligomeren wurde beschrieben (EP 2910384).

Das Dokument JP3495138B offenbart Dodecylgallat als Farbentwickler und Ethylen-bis-Fettsäureamide als Schmelzhilfsmittel. Diese Verwendung von Gallussäure-Estern, insbesondere von Stearyl- und Lauryl-Gallaten, führt zu wärmeempfindlichen Aufzeichnungsmaterialien mit relativ niedriger Starttemperatur der farbgebenden Reaktion. Die Starttemperatur (statische Ansprechempfindlichkeit) ist definitionsgemäß die niedrigste Temperatur, bei welcher die farbbildende Reaktion zwischen Farbbildner und Farbentwickler zu einer Verfärbung des Aufzeichnungsmaterials führt. Diese ist visuell deutlich erkennbar und entspricht üblicherweise einer Bildintensität mit einer optischen Druckdichte von 0,20 Einheiten.

Der Grund für die niedrige Starttemperatur kann unter anderem im inhärenten niedrigen Schmelzpunkt der Gallussäure-Ester, in der Bildung von niedrigschmelzenden Hydraten bei der Naßvermahlung der Gallussäureester während der Herstellung der Beschichtungsmassen oder in der Ausbildung niedrigschmelzender eutektischer Gemische zwischen den Entwicklerstoffen und weiteren Komponenten der Thermoreaktionsschicht liegen.

Niedrige Starttemperaturen verhindern den Einsatz der wärmeempfindlichen Aufzeichnungsmaterialien in Anwendungen in welchen das thermisch unbedruckte, weiße Material Temperaturen ausgesetzt wird, welche über der Starttemperatur liegen. Für die meisten Anwendungen ist daher eine Starttemperatur von größer 70 °C wünschenswert.

Prozesstechnisch wirkt sich eine niedrige Starttemperatur negativ auf die Trocknung der Aufzeichnungsmaterialien nach dem Auftragen der (wässrigen) Beschichtungsmasse aus, da die Trocknungstemperatur unterhalb der Starttemperatur liegen muss, um ein wünschenswertes nicht vergrautes, weißes Material zu erhalten. Praktisch lässt sich dies nur durch eine ausreichend lange Verweilzeit der feuchten Bahn in der auf relativ niedrige Temperaturen eingestellten Trockenpartie der Streichanlage erreichen. Die notwendige Verweilzeit ist direkt proportional zur Länge des Trocknungskanals und umgekehrt proportional zu der Beschichtungsgeschwindigkeit.

Ein niedriger Startpunkt hat somit unmittelbare Auswirkung auf die Wirtschaftlichkeit des Herstellungsverfahrens und die Oberflächenweiße.

Es ist Aufgabe der vorliegenden Erfindung die vorstehend genannten Nachteile des Standes der Technik zu beseitigen. Insbesondere besteht die Aufgabe darin, ein wärmeempfindliches Aufzeichnungsmaterial mit hohem Anteil toxikologisch unbedenklicher Funktionschemikalien natürlichen Ursprungs in der Thermoreaktionsschicht zur Verfügung zu stellen, welches in der Lage ist, wichtige anwendungstechnische Eigenschaften, wie beispielsweise niedrige statische thermische Ansprechempfindlichkeit (hohe Starttemperatur), bei gleichzeitig hoher thermischer Druckempfindlichkeit, zu gewährleisten. Ferner ist es Aufgabe der vorliegenden Erfindung ein Verfahren zur Herstellung eines derartigen wärmeempfindlichen Aufzeichnungsmaterials anzugeben.

Vorstehend genannte Aufgabe wird mit einem wärmeempfindlichen Aufzeichnungsmaterial nach Anspruch 1 gelöst, das dadurch gekennzeichnet ist, dass es ein Trägersubstrat und mindestens eine auf mindestens einer Seite des Trägersubstrats aufgebrachte wärmeempfindliche Thermoreaktionsschicht, die mindestens einen Fluoran-Farbbildner, mindestens einen Farbentwickler, mindestens ein Schmelzhilfsmittel sowie gegebenenfalls übliche Additive, wie Gleitmittel, Stabilisatoren (Alterungsschutzmittel) und/oder Pigmente, enthält, und dadurch gekennzeichnet ist, dass der Farbentwickler Dodecylgallat und das Schmelzhilfsmittel ein Ethylen-bis-Fettsäureamid der Formel I ist,

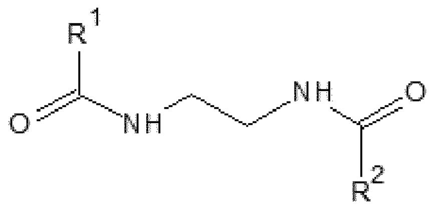

(I),

wobei $R^1$ und $R^2$ $CH_3(CH_2)_mCH_2$ mit m = 13 und/oder 15 sind. Der Begriff "umfasst" kann auch "bestehen aus" bedeuten. Ein Verfahren zur Herstellung des wärmeempfindlichen Aufzeichnungsmaterials wird in Anspruch 11 beschrieben.

Der Kernpunkt der vorliegenden Erfindung liegt demnach darin, ein wärmeempfindliches Aufzeichnungsmaterial mit einer wärmeempfindlichen Thermoreaktionsschicht bereitzustellen, die auf der Kombination eines Fluoran-Farbbildners, Dodecylgallat als Farbentwickler und eines Ethylen-bis-Fettsäureamids der Formel I als Schmelzhilfsmittel beruht.

Das erfindungsgemäße wärmeempfindliche Aufzeichnungsmaterial zeigt ausgewogene, markttaugliche, anwendungstechnische Leistungsmerkmale und basiert auf einem Farbentwickler und einem Schmelzhilfsmittel natürlichen Ursprungs mit vorteilhaften human- und ökotoxikologischem Profil.

Dodecylgallat besitzt die Formel II

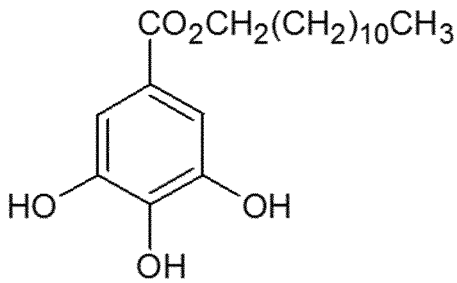

(II) .

Das Ethylen-bis-Fettsäureamid der Formel I hat vorzugsweise einen Schmelzpunkt von etwa 120°C bis 160°C.

Insbesondere umfasst das Schmelzhilfsmittel Ethylen-bis-Fettsäureamide der Formel I folgende Kombinationen:

a) $R^1=CH_2(CH_2)_{13}CH_3$, (m=13) und $R^2=CH_2(CH_2)_{15}CH_3$, (m=15), ($C_{16}/C_{18}$-Ethylen-bis-amid, Ethylen-N-palmitamid-N'-stearamid),
b) $R^1=R^2=CH_2(CH_2)_{13}CH_3$, (m=13), ($C_{16}/C_{16}$-Ethylen-bis-amid, N,N'-Ethylen-bis-palmitamid), und
c) $R^1=R^2=CH_2(CH_2)_{15}CH_3$, (m=15), ($C_{18}/C_{18}$-Ethylen-bis-amid, N,N'-Ethylen-bis-stearamid)

sowie Gemische von a), b) und c).

Industriell hergestellte Ethylen-bis-Fettsäureamide der allgemeinen Formel I gehen von aus natürlichen Quellen (pflanzlichen oder tierischen Ölen/Fetten) gewonnenen Fettsäuren aus, so dass diese in der Regel ein Gemisch der unter a), b) und c) aufgeführten Ethylen-bis-Fettsäureamide enthalten.

Durch passende Auswahl des Fettsäureschnittes und der Reaktionsbedingungen können die relativen $C_{16}/C_{18}$-, $C_{16}/C_{16}$-, und $C_{18}/C_{18}$-Anteile im Produkt, und dadurch auch das Schmelzverhalten, gesteuert werden. Übliche Verunreinigungen kommerzieller Typen von Ethylen-bis-Fettsäureamiden sind Ethylen-bis-Fettsäureamide des Types $C_{14}/C_{16}$, $C_{14}/C_{18}$,$C_{18}/C_{20}$ und andere.

Überraschenderweise hat sich gezeigt, dass der Einsatz von Ethylen-bis-Fettsäureamiden besonders dann zu einer guten dynamischen Sensivität im wärmempfindlichen Aufzeichnungsmaterial führt, wenn der prozentuale Anteil, der unter a), b) und c) aufgeführten Ethylen-bis-Fettsäureamide (in Summe) mindestens etwa 80 Flächenprozent (bestimmt wie nachstehend beschrieben) beträgt. Derartige wärmempfindliche Aufzeichnungsmaterialien besitzen auch den gewünschten Startpunkt von über 70 °C. Beispiele für derartige Ethylen-bis-Fettsäureamide bzw. Ethylen-bis-Stearinsäureamide (EBS) können nachfolgender Tabelle 1 entnommen werden.

Tabelle 1

| Proben | $C_{16}/C_{18}$-Ethylen-bis-amid | $C_{16}/C_{16}$-Ethylen-bis-amid | $C_{18}/C_{18}$-Ethylen-bis-amid | Summe ($C_{16}/C_{16}$-, $C_{16}/C_{18}$-$C_{18}/C_{18}$-)-Fraktionen |
|---|---|---|---|---|
| EBS I | 17,3 | 42,4 | 28,8 | 88,5 |
| EBS II | 25,7 | 42,0 | 16,4 | 84,1 |
| EBS III | 18,5 | 40,6 | 26,4 | 85,5 |
| EBS IV | 37,2 | 42,8 | 12,5 | 92,5 |
| EBS V | 39,3 | 41,0 | 10,9 | 91,2 |
| EBS VI | 31,1 | 45,4 | 17,1 | 93,6 |
| EBS VII | 24,7 | 40,7 | 18,3 | 83,7 |
| EBS VIII | 87,9 | 1,2 | 0 | 89,1 |

Ohne an diese Theorie gebunden zu sein, könnte das gute Leistungsverhalten des erfindungsgemäßen wärmeempfindlichen Aufzeichnungsmaterials durch eine ausreichend hohe Löslichkeit (oder Löslichkeitsgeschwindigkeit) des lipophilen Gallusesters in den Ethylen-bis-Fettsäureamiden erklärt werden, ohne dass sich niedrigschmelzende eutektische Mischungen zwischen dem Farbentwickler und dem Schmelzhilfsmittel, mit negativen Auswirkungen auf den Startpunkt, bilden.

An das Trägersubstrat für das wärmeempfindliche Aufzeichnungsmaterial sind keine besonderen Anforderungen zu stellen. Es ist jedoch bevorzugt, wenn es sich bei dem Trägersubstrat um Papier, synthetisches Papier oder eine Kunststoff-Folie handelt.

Besonders bevorzugte Fluoran-Farbbildner sind beispielsweise
3-Diethylamino-6-methyl-7-anilinofluoran,
3-(N-ethyl-N-p-toluidinamino)-6-methyl-7-anilinofluoran,
3-(N-ethyl-N-isoamylamino)-6-methyl-7-anilinofluoran,
3-Diethylamino-6-methyl-7-(o,p-dimethylanilino)fluoran,
3-Pyrrolidino-6-methyl-7-anilinofluoran,
3-(Cyclohexyl-N-methylamino)-6-methyl-7-anilinofluoran,
3-Diethylamin-7-(m-trifluoromethylanilino)fluoran,
3-N-n-Dibutylamin-6-methyl-7-anilinofluoran,
3-Diethylamino-6-methyl-7-(m-methylanilino)fluoran,
3-N-n-dibutylamin-7-(o-chloroanilino)fluoran,
3-(N-Ethyl-N-tetrahydrofurfurylamin)-6-methyl-7-anilino-fluoran,
3-(N-methyl-N-propylamin)-6-methyl-7-anilinofluoran,
3-(N-ethyl-N-ethoxypropylamin)-6-methyl-7-anilinofluoran,
3-(N-ethyl-N-isobutylamin)-6-methyl-7-anilinofluoran und/oder
3-Dipentylamin-6-methyl-7-anilinofluoran.

Neben dem Ethylen-bis-Fettsäureamid der Formel I können weitere Schmelzhilfsmittel verwendet werden, soweit sie keine unerwünschten Auswirkungen auf die anwendungstechnischen Leistungsmerkmale, wie Oberflächenweiße der Thermofunktionsschicht oder die Starttemperatur des wärmeempfindlichen Aufzeichnungsmaterial, haben. Als weitere Schmelzhilfsmittel können beispielsweise primäre Fettsäureamide, Ether, wie 1,2-Diphenoxyethan, 1,2-Di-(3-methylphenoxy)ethan, 2-Benzyloxynaphthalin, 1,4-Diethoxynaphthalin, Carbonsäureester, wie Dibenzylterephthalat, Benzyl-p-(benzyloxy)benzoat, Di-(p-methylbenzyl)oxalat, Di-(p-chlorbenzyl)oxalat, Di-(p-benzyl)oxalat, aromatische Sulfone, wie Diphenylsulfon, aromatischer Sulfonamide, wie Benzolsulfonanilid, N-Benzyl-p-toluolsulfonamid oder dergleichen eingesetzt werden. Auch besteht die Möglichkeit, Gemische dieser weiteren Schmelzhilfsmittel einzusetzen. Vorzugsweise liegen etwa 0,5 bis etwa 10 Gew.-Teile, bevorzugt etwa 1,5 bis etwa 4 Gew.-Teile, Dodecylgallat (II), bezogen auf 1 Gew.-Teil Farbbildner vor. Mengen unter 0,5 Gew.-Teilen haben den Nachteil, dass die gewünschte thermische Druckempfindlichkeit nicht erreicht wird, während Mengen von mehr als 10 Gew.-Teilen dazu führen, dass die Wirtschaftlichkeit des Aufzeichnungsmaterials leidet, ohne dass anwendungstechnische Verbesserungen zu erzielen wären.

In einer weiteren bevorzugten Ausführungsform werden 0,5 bis 5 Gew.-Teile, besonders bevorzugt 0,9 bis 2,0 Teile Ethylen-bis-Fettsäureamid der Formel I pro 1 Gew.-Teil Dodecylgallat eingesetzt. Ein Gew.-Verhältnis Ethylen-bis-Fettsäureamid zu Dodecylgallat kleiner als 0,5 oder größer 5 wirkt sich negativ auf die thermische Druckempfindlichkeit aus, sei es, dass die in der Schmelzhilfsmittel-Schmelze vorliegende Entwicklermenge zu gering ist oder der

entstandene Farbkomplex durch die große Schmelzhilfsmittelmenge eine nachteilige Verdünnung erfährt.

Ferner ist es bevorzugt, dass der Farbentwickler in einer Menge von 3 bis 35 Gew.-Prozent, bezogen auf den gesamten Feststoffgehalt der wärmeempfindlichen Thermoreaktionsschicht, in der wärmeempfindlichen Thermoreaktionsschicht vorliegt.

Vorzugsweise liegt in der wärmempfindlichen Thermoreaktionsschicht ein Bindemittel vor.

Die Bindemittel können beispielsweise wasserlösliche Stärken, Stärkederivate, Methylcellulose, Hydroxyethylcellulose, Carboxymethylcellulose, partiell- oder vollständig verseifte Polyvinylalkohole, chemisch modifizierte Polyvinylalkohole oder Styrolmaleinsäureanhydrid-Copolymere, Styrolbutadien-Copolymere, Acrylamid-(Meth)-Acrylat-Copolymere, Acrylamid-Acrylat-Methacrylat-Terpolymere, Polyacrylate, Poly(meth)-acrylsäureester, Acrylatbutadien-Copolymere, Polyvinylacetate, Acrylnitril-butadien-Copolymere und/oder vernetzte Biopolymere, wie EcoSphere® (EcoSynthetix), eingesetzt werden.

Vorzugsweise können in der wärmeempfindlichen Thermoreaktionsschicht auch Trenn-(Antihaft-) oder Gleitmittel vorliegen, wie beispielsweise Fettsäure-Metallsalze, z.B. Zinkstearat, Calciumstearat und/oder Behenatsalze, etc.

Fakultativ können Stabilisatoren (Alterungsschutzmittel) in Form von sterisch gehinderten Phenolen, vorzugsweise 1,1,3-Tris-(2-methyl-4-hydroxy-5-cyclohexylphenyl)-butan (DH-43), 1,1,3-Tris-(2-methyl-4-hydroxy-5-tert-butylphenyl)-butan (DH-37) und 1,1-Bis-(2-methyl-4-hydroxy-5-tert-butyl-phenyl)-butan (DH-26), in der wärmeempfindlichen Thermoreaktionsschicht vorliegen.

Auch Harnstoff-Urethan-Verbindungen der Formel (III), wie das Handelsprodukt UU (Urea-Urethane), oder vom 4,4-Dihydroxydiphenylsulfon abgeleitete Ether, wie 4-Benzyloxy-4'-(2-methylglycidyloxy)diphenylsulfon (Handelsname NTZ-95®, Nippon Soda Co. Ltd.), oder oligomere Ether der allgemeinen Formel (IV) (Handelsname D90®, Nippon Soda Co. Ltd.) sind als Stabilisatoren in der wärmeempfindlichen Thermoreaktionsschicht einsetzbar

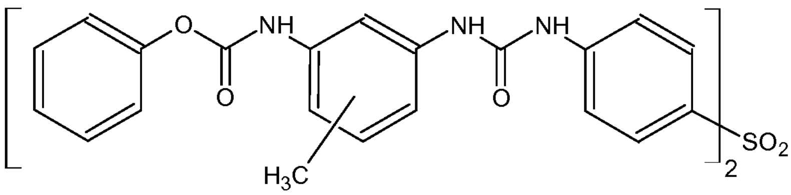

(III)

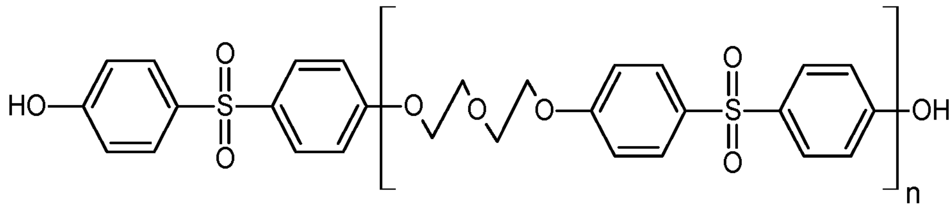

(IV)

,

mit n = 1-3

Vorzugsweise werden der wärmeempfindlichen Thermoreaktionsschicht Pigmente einverleibt, die eine Vielzahl von Funktionen erfüllen können. So fixieren Pigmente auf ihrer Oberfläche die im thermischen Druckprozess entstehende Chemikalien-Schmelze, über Pigmente kann die Oberflächenweiße und Opazität der Aufzeichnungsschicht und deren Bedruckbarkeit mit konventionellen Druckfarben gesteuert werden und Pigmente haben schließlich eine "Extenderfunktion" für die zum Teil teuren farbgebenden Funktionschemikalien.

Zu den besonders geeigneten Pigmenten zählen anorganische Pigmente, sowohl synthetischer als auch natürlicher Herkunft, wie insbesondere Clays, gefällte oder natürliche Calciumcarbonate, Aluminiumoxide, Aluminiumhydroxide, Kieselsäuren, Diathomeenerden, Magnesiumcarbonate, Talk, aber auch organische Pigmente, wie Hohlpigmente mit Styrol-Acrylat-Copolymer-Wand und/oder Harnstoff-Formaldehyd-Kondensatpolymere.

Zum Steuern der Oberflächenweiße des Aufzeichnungsmaterials können optional optische Aufheller, vorzugsweise solche aus der Substanzgruppe der Stilbene, in die wärmempfindliche Thermoreaktionsschicht eingearbeitet werden.

Das erfindungsgemäße wärmeempfindliche Aufzeichnungsmaterial lässt sich anhand üblicher Herstellungsverfahren gewinnen.

Insbesondere unter wirtschaftlichen Gesichtspunkten ist es bevorzugt das erfindungsgemäße wärmeempfindliche Aufzeichnungsmaterial wie in Anspruch 11 beschrieben herzustellen. Danach wird auf ein übliches Trägersubstrat, gegebenenfalls mit darauf ausgebildeten Zwischenschichten, vorzugsweise Pigmentzwischenschichten, eine die Ausgangsmaterialien einer Thermoreaktionsschicht enthaltende wässrige Auftragssuspension aufgetragen und getrocknet,

wobei die wässrige Auftragssuspension einen Feststoffgehalt von etwa 20 bis 75 Gew.-% aufweist und als Farbentwickler mindestens Dodecylgallat und als Schmelzhilfsmittel mindestens ein Ethylen-bis-Fettsäureamid der Formel I enthält, und wobei die Auftragssuspension mittels des Curtain-Coating-Verfahrens bei einer Betriebsgeschwindigkeit der Streichanlage von mindestens etwa 400 m/min aufgetragen und getrocknet wird.

Das sogenannte Curtain-Coating-Verfahren ist dem Fachmann bekannt und zeichnet sich durch folgende Kriterien aus:
Beim Curtain-Coating-Beschichtungsverfahren (Vorhangbeschichtungsverfahren) wird ein frei fallender Vorhang einer Beschichtungsdispersion gebildet. Durch freien Fall wird die in Form eines dünnen Filmes (Vorhangs) vorliegende Beschichtungsdispersion auf ein Substrat "gegossen", um die Beschichtungsdispersion auf das Substrat aufzubringen. Die DE 10196052 T1 offenbart den Einsatz des Curtain-Coating-Beschichtungsverfahrens bei der Herstellung von Informationsaufzeichnungsmaterialien, u.a. auch von wärmeempfindlichen Aufzeichnungsmaterialien, wobei mehrschichtige Aufzeichnungsschichten durch Aufbringen des aus mehreren Beschichtungsdispersionsfilmen bestehenden Vorhangs auf Substrate erfolgen (Gesch. max. 200 m/min).

Wird der Wert des Feststoffgehalts der wärmeempfindlichen Auftragssuspension von etwa 20 Gew.-% unterschritten, dann wird die gewünschte Wirtschaftlichkeit des Verfahrens nicht hinreichend erzielt, da eine zu große Menge Wasser aus der Thermoreaktionsschicht durch schonende Trocknung in kurzer Zeit entfernt werden muss, was sich nachteilig auf die Streichgeschwindigkeit auswirkt. Wird der Wert von 75 Gew.-% überschritten, dann führt dies nicht zu einer nennenswerten Verbesserung, sondern bedeutet nur einen erhöhten technischen Aufwand, um die Stabilität des Streichfarben-Vorhangs während des Beschichtungsprozesses zu gewährleisten.

Von besonderem Vorteil hat es sich erwiesen, wenn der Viskosität der wässrigen Auftragssuspension zur Ausbildung der wärmeempfindlichen Thermoreaktionsschicht Aufmerksamkeit zugewandt wird. So ist es vorteilhaft, wenn die wässrige entlüftete Auftragssuspension eine Viskosität von etwa 150 bis 800 mPas (Brookfield 100 U/min, 20 °C), insbesondere von etwa 200 bis 500 mPas aufweist.

Wird der Wert von etwa 150 mPas unterschritten oder die Obergrenze von 800 mPas überschritten, dann führt dies zu einer mangelhaften Lauffähigkeit der Streichmasse am Streichaggregat.

Die Wirtschaftlichkeit des erfindungsgemäßen Verfahrens kann durch Erhöhung der Geschwindigkeit auf mehr als etwa 750 m/min und insbesondere auf mehr als etwa 1000 m/min verbessert werden. Überraschenderweise wurde festgestellt, dass selbst eine Geschwindigkeit von mehr als etwa 1500 m/min zu einem unbeeinträchtigt vorteilhaften wärmeempfindlichen Aufzeichnungsmaterial führt, ohne dass irgendwelche Nachteile bei der Betriebsdurchführung oder bei den Leistungsmerkmalen des wärmeempfindlichen Aufzeichnungsmaterials feststellbar wären.

Zur Optimierung des erfindungsgemäßen Verfahrens kann die Oberflächenspannung der wässrigen Auftragssuspension in geeigneter Weise eingestellt werden, bevorzugt auf etwa 25 bis 60 mN/m und besonders bevorzugt auf etwa 35 bis 50 mN/m (statische Ringmethode nach Du Noüy, DIN 53914).

Um gewisse streichtechnische Eigenschaften zu verbessern, ist es im Einzelfall nützlich neben den vorstehend genannten Bestandteilen noch weitere Bestandteile einzubeziehen, insbesondere Rheologie-Hilfsmittel, wie Verdicker oder Tenside. Es steht im Belieben des Fachmanns, hier die jeweils geeignete Mengenbestimmung vorzunehmen.

Im Rahmen des erfindungsgemäßen Verfahrens kann die Thermoreaktionsschicht on-line oder in einem separaten Streichvorgang off-line ausgebildet werden. Dies gilt auch für eventuell nachfolgend aufgetragene Schichten oder Zwischenschichten.

Im Allgemeinen ist es vorteilhaft, wenn die getrocknete wärmeempfindliche Thermoreaktionsschicht einer Glättmaßnahme unterzogen wird. Dabei ist es vorteilhaft, die Bekk-Glätte, gemessen nach ISO 5627, auf etwa 100 bis 1200 sec, insbesondere auf etwa 300 bis 700 sec, einzustellen.

Die im Zusammenhang mit dem wärmempfindlichen Aufzeichnungsmaterial bevorzugten Ausführungsformen gelten ebenfalls für das erfindungsgemäße Verfahren.

Die Vorteile, die mit der vorliegenden Erfindung verbunden sind, lassen sich im Wesentlichen wie folgt zusammenfassen:
Die dem erfindungsgemäßen wärmeempfindlichen Aufzeichnungsmaterial zu Grunde liegenden Funktionschemikalien sind überwiegend natürlichen Ursprungs. Das erfindungsgemäße wärmempfindliche Aufzeichnungsmaterial zeigt bei seiner Anwendung wünschenswerte anwendungstechnische Eigenschaften, insbesondere eine gute dynamische Ansprechempfindlichkeit im Thermodrucker bei gleichzeitig hoher Starttemperatur. Dies ermöglicht eine betriebswirtschaftlich vorteilhafte, extrem hohen Verfahrensführung der Streichanlage bei einer Geschwindigkeit von bis zu mehr als etwa 1500 m/min, ohne dass relevante Beeinträchtigungen der anzustrebenden Eigenschaften des erfindungsgemäßen wärmeempfindlichen Aufzeichnungsmaterials auftreten.

Die Erfindung wird nachfolgend anhand von nicht beschränkenden Beispielen im Detail dargestellt:

Beispiele

Der Auftrag einer wässrigen Auftragssuspension zur Ausbildung der Thermoreaktionsschicht eines wärmeempfindlichen Aufzeichnungspapiers erfolgte im Labormaßstab mittels einer Stabrakel auf der gestrichenen Seite eines dünngewichtigen vorgestrichenen Papieres von 50 g/m$^2$. Nach Trocknung mit Heißluft (Fön) wurde ein thermisches Aufzeichnungsblatt erhalten. Die Auftragsmenge der wärmeempfindlichen Schicht lag zwischen 4,0 und 4,5 g/m$^2$. Bei dem vorgestrichenen Papier handelt es sich um ein holzfreies Papier mit einem Gewicht von 43 g/m$^2$ auf welches, zur Ausbildung einer Zwischenschicht, eine wässrige Beschichtungsmasse, bestehend aus 100 Teilen kalziniertem Kaolin (Ansilex von BASF), 20 Teilen einer 50 % Styrol-Butadien-Copolymer-Emulsion und 125 Teilen Wasser, mit einem Trockenauftrag von 7 g/m$^2$ mittels einer Rakel aufgebracht wurde.

Im Produktionsmaßstab erfolgte der Auftrag der wässrigen wärmeempfindlichen Auftragssuspension auf ein mit einer Zwischenschicht versehenes Papier (siehe oben) eines Flächengewichtes von 50 g/m$^2$ mittels des Curtain-Coating-Verfahrens.

Die Viskosität der wässrigen Auftragssuspension betrug 450 mPas (nach Brookfield, 100 U/min, 20 °C) (im entlüfteten Zustand). Deren Oberflächenspannung betrug 46 mN/m (statistische Ringmethode). Das Streichwerk war in-line angeordnet. Das Curtain-Coating-Verfahren wurde bei einer Geschwindigkeit von 1250 m/min betrieben.

Anhand der vorstehend gemachten Angaben wurde ein wärmeempfindliches Aufzeichnungsmaterial bzw. Thermopapier hergestellt, wobei die folgenden Rezepturen von wässrigen Auftragssuspensionen zur Ausbildung eines Verbundgebildes auf einem Trägersubstrat herangezogen und anschließend in üblicher Weise die weiteren Schichten, insbesondere eine Schutzschicht, ausgebildet wurden, worauf nicht gesondert eingegangen wird, da hiervon der Kern der Erfindung nicht berührt wird.

Rezeptur 1

Eine wässrige Auftragssuspension wurde hergestellt, indem eine wässrige Dispersion des Farbbildners, die durch Mahlen von 19 Teilen eines Farbbildners (FBB) mit 34 Teilen einer 15 % wässrigen Lösung von Ghosenex™ L-3266 (sulfonierter Polyvinylalkohol, Nippon Ghosei) in einer Perlen-Mühle hergestellt wurde, eine wässrige Farbentwickler-Dispersion, die durch Mahlen von 17,5 Teilen Gallussäure-Ester zusammen mit 16 Teilen des Schmelzhilfsmittels und mit 54 Teilen einer 15 %-igen wässrigen Lösung von Ghosenex™ L-3266 in der Perl-Mühle hergestellt wurde, 140 Teilen einer 56 %igen PCC-Dispersion (präzipitiertes Calciumcarbonat, Precarb®, Schaefer Kalk), 40 Teilen einer wässrigen 20 %-igen Zinkstearatdispersion, 50 Teilen einer 10 %-igen wässrigen Polyvinylalkohollösung (Mowiol 28-99, Kuraray Europe) und 1 Teil einer 31 % wässrigen Lösung des optischen Aufhellers Blankophor® PT gut gemischt wurden.

Die so erhaltenen wärmeempfindlichen Beschichtungssuspensionen, die sich aus Tabelle 2 ergeben, wurden jeweils mit 153 Teilen Wasser auf einen Feststoffgehalt von 30 % eingestellt und verwendet, um ein Verbundgebilde aus Papierträger und Thermoreaktionsschicht herzustellen.

Rezeptur 2

Eine wässrige Auftragssuspension wurde hergestellt, indem eine wässrige Dispersion des Farbbildners, die durch Mahlen von 14,2 Teilen FBB I mit 25,4 Teilen einer 15 % wässrigen Lösung von Ghosenex™ L-3266 (sulfonierter Polyvinylalkohol, Nippon Ghosei) in einer Perlen-Mühle hergestellt wurde, eine wässrige Dispersion, die durch Mahlen von 4,8 Teilen FBB II mit 8,6 Teilen einer 15 % wässrigen Lösung von Ghosenex™ L-3266 (sulfonierter Polyvinylalkohol, Nippon Ghosei) in einer Perlen-Mühle hergestellt wurde, eine wässrige Farbentwickler-Dispersion, die durch Mahlen von 17,5 Teilen Gallussäure-Ester zusammen mit 16 Teilen des Schmelzhilfsmittels und mit 55 Teilen einer 15 %-igen wässrigen Lösung von Ghosenex™ L-3266 in der Perl-Mühle hergestellt wurde, 140 Teilen einer 56 %-igen PCC-Dispersion (präzipitiertes Calciumcarbonat, Precarb®, Schaefer Kalk), 40 Teilen einer wässrigen 20 %-igen Zinkstearatdispersion, 50 Teilen einer 10 %-igen wässrigen Polyvinylalkohollösung (Mowiol 28-99, Kuraray Europe) und 1 Teil einer wässrigen Lösung des optischen Aufhellers Blankophor® PT gut gemischt wurden.

Die so erhaltene wärmeempfindliche Beschichtungssuspension, die sich aus Tabelle 2 ergibt, wurde jeweils mit 153 Teilen Wasser auf einen Feststoffgehalt von 30 % eingestellt und herangezogen, um ein Verbundgebilde aus Papierträger und Thermoreaktionsschicht herzustellen.

Rezeptur 3

Zu 524,5 Teilen der nach Rezeptur 1 hergestellten Auftragssuspension wurde eine wässrige Dispersion des Alterungsschutzmittels, die durch Mahlen von 6 Teilen Alterungsschutzmittel mit 11,7 Teilen einer 15 %-igen wässrigen Lösung von Ghosenex™ L-3266 (sulfonierter Polyvinylalkohol, Nippon Ghosei) in einer Perlen-Mühle hergestellt wurde, zugemischt und durch Rühren gut homogenisiert.

Die so erhaltenen wärmeempfindlichen Beschichtungssuspensionen, die sich aus Tabelle 2 ergeben, wurden jeweils mit 8 Teilen Wasser auf einen Feststoffgehalt von 30 % eingestellt und herangezogen, um ein Verbundgebilde aus Papierträger und Thermoreaktionsschicht herzustellen.

Rezeptur 4

Zu 525,5 Teilen der nach Rezeptur 2 hergestellten Auftragssuspension wurde eine wässrige Dispersion des Alterungsschutzmittels, die durch Mahlen von 6 Teilen Alterungsschutzmittel mit 11,7 Teilen einer 15 % wässrigen Lösung von Ghosenex™ L-3266 (sulfonierter Polyvinylalkohol, Nippon Ghosei) in einer Perlen-Mühle hergestellt wurde, zugemischt und durch Rühren gut homogenisiert.
Die so erhaltene wärmeempfindliche Beschichtungssuspension, die sich aus Tabelle 2 ergibt, wurde jeweils mit 7 Teilen Wasser auf einen Feststoffgehalt von 30 % eingestellt und herangezogen, um ein Verbundgebilde aus Papierträger und Thermoreaktionsschicht herzustellen.

Rezeptur 5a

In der Rezeptur 2 wurden anstelle der PCC-Dispersion 109 Teile einer 72 %-igen Streichkaolin-Dispersion (Lustra® S von BASF) eingesetzt.
Die so erhaltene wärmeempfindliche Beschichtungssuspension, die sich aus Tabelle 2 ergibt, wurde mit 185 Teilen Wasser auf einen Feststoffgehalt von 30 % eingestellt und herangezogen, um ein Verbundgebilde aus Papierträger und Thermoreaktionsschicht herzustellen.

Rezeptur 5b

In der Rezeptur 2 wurden anstelle der PCC-Dispersion 140 Teile einer 56 %-igen Aluminiumhydroxid-Dispersion (Martifin® OL von Albermarle) verwendet.
Die so erhaltene wärmeempfindliche Beschichtungssuspension, die sich aus Tabelle 2 ergibt, wurde mit 153 Teilen Wasser auf einen Feststoffgehalt von 30 % eingestellt und herangezogen, um ein Verbundgebilde aus Papierträger und Thermoreaktionsschicht herzustellen.

Rezeptur 5c

In der Rezeptur 2 wurden anstelle der PCC-Dispersion 109 Teile einer Pigmentdispersion, welche durch Einrühren von 15,5 Teilen einer amorphen Fällungskieselsäure (Sipernat® von Evonik) in 110 Teile einer 56 %-igen PCC-Dispersion (präzipitiertes Calciumcarbonat, Precarb®, Schaefer Kalk) erhalten wurde, verwendet.
Die so erhaltene wärmeempfindliche Beschichtungssuspension, die sich aus Tabelle 2 ergibt, wurde mit 163 Teilen Wasser auf einen Feststoffgehalt von 30 % eingestellt und herangezogen, um ein Verbundgebilde aus Papierträger und Thermoreaktionsschicht herzustellen.

Rezeptur 5d

In der Rezeptur 2 wurden anstelle der PCC-Dispersion 109 Teile einer Pigmentdispersion, welche durch Einrühren von 15,5 Teilen einer amorphen Fällungskieselsäure (Sipernat® von Evonik) in 110 Teile einer 56 %-igen Aluminiumhydroxid -Dispersion (Martifin® OL von Albermarle) erhalten wurde, verwendet.
Die so erhaltene wärmeempfindliche Beschichtungssuspension, die sich aus Tabelle 2 ergibt, wurde mit 163 Teilen Wasser auf einen Feststoffgehalt von 30 % eingestellt und herangezogen, um ein Verbundgebilde aus Papierträger und Thermoreaktionsschicht herzustellen.

Rezeptur 5e

In der Rezeptur 2 wurden anstelle der PCC-Dispersion 109 Teile einer Pigmentdispersion, welche durch Einrühren von 15,5 Teilen einer amorphen Fällungskieselsäure (Sipernat® von Evonik) in 86 Teile einer 72 %-igen Streichkaolin-Dispersion (Lustra® S von BASF) erhalten wurde, verwendet.
Die so erhaltene wärmeempfindliche Beschichtungssuspension, die sich aus Tabelle 2 ergibt, wurde mit 188 Teilen Wasser auf einen Feststoffgehalt von 30 % eingestellt und herangezogen, um ein Verbundgebilde aus Papierträger und Thermoreaktionsschicht herzustellen.
Die Korngöße (D4,3-Wert in μm) der gemahlenen Funktionschemikalien wurde auf 1,0 ± 0,1 μm eingestellt. Die Messung der Korngrößenverteilung erfolgte durch Laserbeugung mit einem Coulter LS230-Gerät der Fa. Beckman Coulter.
Die thermischen Aufzeichnungsmaterialien gemäß Tabelle 2 wurden wie nachstehend beschrieben ausgewertet.

(1) Dynamische Farbdichte

Die Papiere (6 cm breite Streifen) wurden unter Verwendung des Atlantek 200 Testdruckers (Fa. Atlantek, USA) mit einer Kyocera Druckleiste von 200 dpi und 560 Ohm bei einer angelegten Spannung von 20,6 V und einer maximalen Pulsbreite von 0,8 ms mit einem Schachbrett-Muster mit 10 Energieabstufungen thermisch bedruckt. Die Bilddichte (optische Dichte, o. D.) wurde mit einem Macbeth-Densitometer RD-914 von Gretag gemessen.

(2) Statische Farbdichte (Starttemperatur):

Das Aufzeichnungsblatt wurde gegen eine Reihe von auf unterschiedliche Temperaturen erhitzen und thermostatierten metallischen Stempeln mit einem Anpressdruck von 0,2 kg/cm$^2$ und einer Kontaktzeit von 5 sec gepresst (Thermoprüfer TP 3000QM, Maschinenfabrik Hans Rychiger AG, Steffisburg, Schweiz). Die Bilddichte (opt. Dichte) der so erzeugten Bilder wurde mit einem Macbeth-Densitometer RD-914 von Gretag gemessen. Der statische Startpunkt ist definitionsmäßig die niedrigste Temperatur, bei welcher eine optische Dichte von 0,2 erreicht wird.

(3) Beständigkeit des Druckbildes unter den Bedingungen der künstlichen Alterung:

Je eine gemäß dem Verfahren von (1) dynamisch aufgezeichnete Probe des thermischen Aufzeichnungspapiers wurde für 7 Tage unter folgenden Bedingungen gelagert:

50°C (Trocken-Alterung),
40°C, 85 % relativer Feuchte (Feucht-Alterung) und
Kunstlicht von Leuchtstoffröhren, Beleuchtungsstärke 16000 Lux (Lichtechtheit).

Nach Ablauf der Testzeit wurde die Bilddichte (o. D.) gemessen und entsprechend der Formel (V) in Bezug zu den entsprechenden Bilddichtewerten vor der künstlichen Alterung gesetzt.

$$\%\,Veränderung\ der\ o.D. = \left(\frac{Bilddichte\ nach\ Alterung}{Bilddichte\ vor\ Alterung} - 1\right) * 100 \qquad (V)$$

Die Quantifizierung der Bestandteile der EBS Muster erfolgt nach GC-Trennung und FID-Detektion.
Es wurden Flächenprozente verwendet; der Integrationsbereich lag hinter dem Lösemittelpeak (ab einer Retentionszeit von 5 Min.).
0,2 µl einer 0,05 Gew.% o-Xylol-Lösungen der EBS-Proben wurden splitless injiziert.
GC-Bedingungen:

Injektortemperatur: 360 °C
Trennsäule Varian CP 7491, 15 max 0,32 mm ID, Säulenfluß 1,5 ml/min
Trägergas: He
Temperaturprogramm: 100 °C für 2 Min, 20 °C pro Min auf 250 °C, 10 °C pro Min auf 360 °C
Detektortemperatur 370 °C.

Die chemische Zuordnung erfolgte mittels GC-MS Kopplung.

Tabelle 2

| Zuordnung der Papiermuster zu den Rezepturen der wärmeempfindlichen Beschichtung | | | | | | | |
|---|---|---|---|---|---|---|---|
| Muster | Rezeptur | Farbbildner* | | Farbentwickler | Schmelzhilfsmittel ** | Alterungsschutz | Pigment *** |
| | | I | II | | | | |
| 1 | 1 | ODB-2 | - | Dodecylgallat | EBS I | - | PCC |
| 2 | 1 | ODB-2 | - | Dodecylgallat | EBS II | - | PCC |
| 3 | 1 | ODB-2 | - | Dodecylgallat | EBS III | - | PCC |
| 4 | 1 | ODB-2 | - | Dodecylgallat | EBS IV | - | PCC |
| 5 | 1 | ODB-2 | - | Dodecylgallat | EBS V | - | PCC |
| 6 | 1 | ODB-2 | - | Dodecylgallat | EBS VI | - | PCC |
| 7 | 1 | ODB-2 | - | Dodecylgallat | EBS VII | - | PCC |

(fortgesetzt)

| Zuordnung der Papiermuster zu den Rezepturen der wärmeempfindlichen Beschichtung | | | | | | | |
|---|---|---|---|---|---|---|---|
| Muster | Rezeptur | Farbbildner* | | Farbentwickler | Schmelzhilfsmittel ** | Alterungsschutz | Pigment *** |
| | | I | II | | | | |
| 8 | 1 | ODB-2 | - | Dodecylgallat | EBS VIII | - | PCC |
| 9 | 2 | ODB-2 | S205 | Dodecylgallat | EBS I | - | PCC |
| 10 | 3 | ODB-2 | - | Dodecylgallat | EBS I | DH-43 | PCC |
| 11 | 4 | ODB-2 | S205 | Dodecylgallat | EBS I | DH-43 | PCC |
| 12 | 3 | ODB-2 | - | Dodecylgallat | EBS I | UU | PCC |
| 13 | 4 | ODB-2 | S205 | Dodecylgallat | EBS I | UU | PCC |
| 14 | 3 | ODB-2 | S205 | Dodecylgallat | EBS I | DH-37 | PCC |
| 15 | 4 | ODB-2 | S205 | Dodecylgallat | EBS I | DH-43 | PCC |
| 16 | 5c | ODB-2 | S205 | Dodecylgallat | EBS I | - | PCC : Silica |
| 17 | 5a | ODB-2 | S205 | Dodecylgallat | EBS I | - | Clay |
| 18 | 5e | ODB-2 | S205 | Dodecylgallat | EBS I | - | Clay : Silica |
| 19 | 5b | ODB-2 | S205 | Dodecylgallat | EBS I | - | $Al(OH)_3$ |
| 20 | 5d | ODB-2 | S205 | Dodecylgallat | EBS I | - | $Al(OH)_3$ : Silica |
| V1 | 1 | ODB-2 | - | Methylgallat | EBS I | - | PCC |
| V2 | 1 | ODB-2 | - | Ethylgallat | EBS I | - | PCC |
| V3 | 1 | ODB-2 | - | Propylgallat | EBS I | - | PCC |
| V4 | 1 | ODB-2 | - | Octylgallat | EBS I | - | PCC |
| V5 | 1 | ODB-2 | | Stearylgallat | EBS I | - | PCC |
| V6 | 1 | ODB-2 | - | Dodecylgallat | Stearamid | - | PCC |
| V7 | 1 | ODB-2 | - | Dodecylgallat | N-methylolstearamid | - | PCC |
| V8 | 1 | ODB-2 | - | Dodecylgallat | Behenamid | - | PCC |
| V9 | 1 | ODB-2 | - | Dodecylgallat | Erucamid | - | PCC |
| V10 | 1 | ODB-2 | - | Dodecylgallat | Ethylen-bis-oleamid | - | PCC |

*S205 = 3-(N-ethyl-N-isoamylamino)-6-methyl-7-anilinofluoran, ODB-2 = 3-N-n-Dibutylamin-6-methyl-7-anilinofluoran
**siehe Tabelle 1
***PCC = Precipitated $CaCO_3$

Tabelle 3 fasst die Ergebnisse der anwendungstechnischen Papierprüfungen zusammen.

Tabelle 3

| Ergebnisse der anwendungstechnischen Papierprüfungen | | | | | |
|---|---|---|---|---|---|
| Muster | max .o.D. | Statischer Startpunkt (°C) | Künstliche Alterung | | |
| | | | trocken | feucht | Licht |
| 1 | 1,15 | 77 | -28 | -37 | -43 |
| 2 | 1,16 | 77 | -15 | -19 | -43 |
| 3 | 1,15 | 75 | -7 | -31 | 34 |
| 4 | 1,17 | 77 | -12 | -20 | -34 |

(fortgesetzt)

| Ergebnisse der anwendungstechnischen Papierprüfungen | | | | | |
|---|---|---|---|---|---|
| Muster | max .o.D. | Statischer Startpunkt (°C) | Künstliche Alterung | | |
| | | | trocken | feucht | Licht |
| 5 | 1,16 | 77 | -10 | -20 | -38 |
| 6 | 1,16 | 77 | -18 | -19 | -37 |
| 7 | 1,16 | 76 | -16 | -19 | -38 |
| 8 | 1,15 | 77 | -13 | -22 | -40 |
| 9 | 1,14 | 72 | -5 | -19 | -37 |
| 10 | 1,15 | 75 | -3 | -18 | -33 |
| 11 | 1,16 | 73 | -3 | -15 | -32 |
| 12 | 1,16 | 77 | -1 | -12 | -31 |
| 13 | 1,18 | 76 | 0 | -11 | -34 |
| 14 | 1,18 | 75 | -2 | -13 | -33 |
| 15 | 1,16 | 75 | -2 | -10 | -31 |
| 16 | 1,21 | 74 | -19 | -31 | -44 |
| 17 | 1,16 | 72 | -15 | -34 | -36 |
| 18 | 1,20 | 74 | -18 | -36 | -43 |
| 19 | 1,13 | 74 | -20 | -33 | -41 |
| 20 | 1,21 | 75 | -26 | -36 | -42 |
| V1 | 0,98 | 79 | -15 | -47 | -45 |
| V2 | 0,83 | 112 | -14 | -38 | -42 |
| V3 | 1,20 | < 60 | -6 | -40 | -42 |
| V4 | 1,23 | < 60 | -15 | -29 | -42 |
| V5 | 0,92 | 79 | -43 | -51 | -38 |
| V6 | 1,05 | 70 | -32 | -46 | -51 |
| V7 | 1,05 | 74 | -44 | -51 | -48 |
| V8 | 1,13 | 69 | -31 | -48 | -35 |
| V9 | 1,14 | < 60 | -75 | -81 | -58 |
| V10 | 1,04 | < 60 | -46 | -58 | -51 |

Das erfindungsgemäße wärmeempfindliche Aufzeichnungsmaterial besitzt folgende vorteilhaften Eigenschaften:

(1) Die erfindungsgemäße wärmeempfindlichen Aufzeichnungsmaterialen (Muster 1 bis 8) zeigen gleichzeitig eine deutlich höhere Ansprechempfindlichkeit im Thermodrucker (o. D. 1,15 bis 1,17) und eine höhere Starttemperatur (75 bis 77 °C) verglichen mit den Vergleichsmustern mit alternativen Gallussäure-Estern (Muster V1-V5) oder mit anderen Schmelzhilfsmittel natürlichen Ursprungs, wie primären Fettsäureamiden oder alternativen Ethylen-bis-amiden (Muster V6 bis V10).

(2) Die Verwendung von Farbbildnergemischen in den erfindungsgemäßen wärmempfindlichen Aufzeichnungsmaterialien haben keine nachteiligen Auswirkungen auf die hohe Starttemperatur und die hohe Thermo-Druckempfindlichkeit, unabhängig davon, ob Rezepturen ohne (Muster 9) oder mit Alterungsschutzmittel (Muster 11, 13, 14 und 15) verwendet werden, und tragen wesentlich zur Verbesserung der Bildbeständigkeit bei, wie durch die künstlichen Alterungswerte belegt.

(3) Die Verwendung von Alterungsschutzmittel in Kombination mit nur einem Farbbildner (Muster 10, 12) ist ebenfalls vorteilhaft möglich.

(4) Die Kombination von Fluoran-Farbbildner, Dodecylgallat und Schmelzhilfsmittel der Formel I ist mit unterschiedlichsten Pigmenten kompatibel, ohne dass die Eigenschaften leiden (Muster 16 bis 20). Diese Möglichkeit ist insbesondere von Vorteil für die Steuerung von weiteren anwendungstechnischen Eigenschaften des erfindungsgemäßen wärmeempfindlichen Aufzeichnungsmaterials, wie Weiße, Glanz, Aufnahme- und Fixiervermögen von Druckfarben, Unterbindung von Ablagerungen an der Druckerleiste während des Thermodrucks, Abrasivität, etc.

(5) Dank des hohen Startpunktes ist das streichtechnische Fenster ausreichend groß, um auch bei hohen Beschichtungsgeschwindigkeiten ein Aufzeichnungsmaterial mit guter Oberflächenweise und niedrigem Feuchtegehalt produzieren zu können.

## Patentansprüche

1. Wärmeempfindliches Aufzeichnungsmaterial, umfassend ein Trägersubstrat und mindestens eine auf mindestens einer Seite des Trägersubstrats aufgebrachte wärmeempfindliche Thermoreaktionsschicht, die mindestens einen Fluoran-Farbbildner, mindestens einen Farbentwickler, mindestens ein Schmelzhilfsmittel sowie gegebenenfalls übliche Additive, wie Gleitmittel, Stabilisatoren und/oder Pigmente, enthält,
**dadurch gekennzeichnet, dass**
der Farbentwickler Dodecylgallat und das Schmelzhilfsmittel ein Ethylen-bis-Fettsäureamid der Formel I ist,

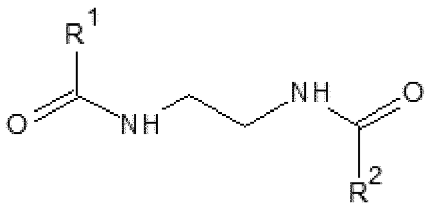

(I),

wobei $R^1$ und $R^2$ $CH_3(CH_2)_mCH_2$ mit m = 13 und/oder 15 sind.

2. Wärmeempfindliches Aufzeichnungsmaterial nach Anspruch 1,
**dadurch gekennzeichnet, dass**
der Gehalt des Ethylen-bis-Fettsäureamids der Formel I an $C_{16}/C_{16}$-, $C_{16}/C_{18}$-, und $C_{18}/C_{18}$-Ethylen-bis-Fettsäureamiden in Summe mindestens 80 Flächenprozent, bestimmt mittels GC-Trennung und FID-Detektion, beträgt.

3. Wärmeempfindliches Aufzeichnungsmaterial nach einem der Ansprüche 1 oder 2,
**dadurch gekennzeichnet, dass**
der mindestens eine Fluoran-Farbbildner aus der Gruppe
3-Diethylamino-6-methyl-7-anilinofluoran,
3-(N-ethyl-N-p-toluidinamino)-6-methyl-7-anilinofluoran,
3-(N-ethyl-N-isoamylamino)-6-methyl-7-anilinofluoran,
3-Diethylamino-6-methyl-7-(o,p-dimethylanilino)fluoran,
3-Pyrrolidino-6-methyl-7-anilinofluoran,
3-(Cyclohexyl-N-methylamino)-6-methyl-7-anilinofluoran,
3-Diethylamin-7-(m-trifluoromethylanilino)fluoran,
3-N-n-Dibutylamin-6-methyl-7-anilinofluoran,
3-Diethylamino-6-methyl-7-(m-methylanilino)fluoran,
3-N-n-dibutylamin-7-(o-chloroanilino)fluoran,
3-(N-Ethyl-N-tetrahydrofurfurylamin)-6-methyl-7-anilino-fluoran,
3-(N-methyl-N-propylamin)-6-methyl-7-anilinofluoran,
3-(N-ethyl-N-ethoxypropylamin)-6-methyl-7-anilinofluoran,
3-(N-ethyl-N-isobutylamin)-6-methyl-7-anilinofluoran und/oder
3-Dipentylamin-6-methyl-7-anilinofluoran ausgewählt ist.

4. Wärmeempfindliches Aufzeichnungsmaterial nach mindestens einem der Ansprüche 1 bis 3, **dadurch gekennzeichnet, dass** 0,5 bis 10 Gew.-Teile Dodecylgallat pro 1 Gew.-Teil Fluoran-Farbbildner eingesetzt werden.

5. Wärmeempfindliches Aufzeichnungsmaterial nach mindestens einem der Ansprüche 1 bis 4, **dadurch gekennzeichnet, dass** 1,5 bis 4 Gew.-Teile Dodecylgallat pro 1 Gew.-Teil Fluoran-Farbbildner eingesetzt werden.

6. Wärmeempfindliches Aufzeichnungsmaterial nach mindestens einem der Ansprüche 1 bis 5, **dadurch gekennzeichnet, dass** 0,5 bis 5 Gew.-Teile Ethylen-bis-Fettsäureamid der Formel I pro 1 Gew.-Teil Dodecylgallat eingesetzt werden.

7. Wärmeempfindliches Aufzeichnungsmaterial nach mindestens einem der Ansprüche 1 bis 6, **dadurch gekennzeichnet, dass** der Farbentwickler in einer Menge von 3 bis 35 Gew.-%, bezogen auf den gesamten Feststoffgehalt der wärmeempfindlichen Thermoreaktionsschicht, vorliegt.

8. Wärmeempfindliches Aufzeichnungsmaterial nach mindestens einem der Ansprüche 1 bis 7 **dadurch gekennzeichnet, dass** der Stabilisator in Form von sterisch gehinderten Phenolen, vorzugsweise 1,1,3-Tris-(2-methyl-4-hydroxy-5-cyclohexyl-phenyl)-butan, 1,1,3-Tris-(2-methyl-4-hydroxy-5-tert-butylphenyl)-butan, 1,1-Bis-(2-methyl-4-hydroxy-5-tert-butyl-phenyl)-butan, oder in Form von Harnstoff-Urethan-Verbindungen der allgemeinen Formel III,

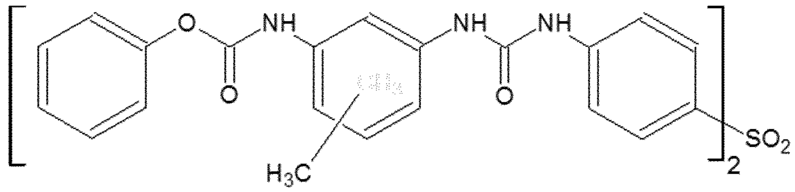

(III)

oder oligomeren Ethern der allgemeinen Formel IV,

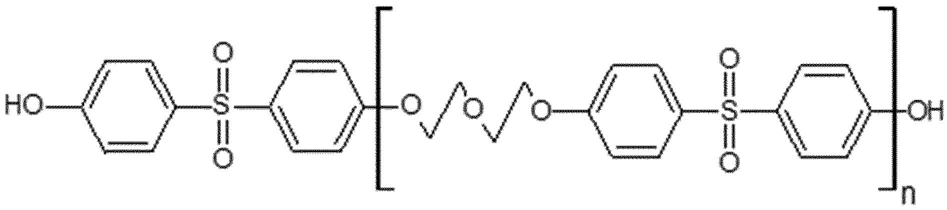

(IV)

mit n = 1-3
eingesetzt wird.

9. Wärmeempfindliches Aufzeichnungsmaterial nach mindestens einem der Ansprüche 1 bis 8 **dadurch gekennzeichnet, dass** als Pigment präzipitiertes Calciumcarbonat, Aluminiumhydroxid, Kaoline, gefällte Kieselsäuren in reiner Form oder Gemische davon eingesetzt werden.

10. Wärmeempfindliches Aufzeichnungsmaterial nach mindestens einem der Ansprüche 1 bis 9, **dadurch gekennzeichnet, dass** als Trägersubstrat Papier, synthetisches Papier oder Kunststoff-Folie, gegebenenfalls mit darauf ausgebildeten Zwischenschichten, eingesetzt wird.

11. Verfahren zur Herstellung eines wärmeempfindlichen Auszeichnungsmaterials nach mindestens einem der vorhergehenden Ansprüche, **dadurch gekennzeichnet, dass** auf ein Trägersubstrat, gegebenenfalls mit darauf ausgebildeten Zwischenschichten, eine die Ausgangsmaterialien einer Thermoreaktionsschicht, die mindestens einen Fluoran-Farbbildner, mindestens einen Farbentwickler, mindestens ein Schmelzhilfsmittel sowie gegebenenfalls übliche Additive wie Gleitmittel, Stabilisatoren und/oder Pigmente enthält, enthaltende wässrige Auftragssuspension aufgetragen und getrocknet wird, wobei die wässrige Auftragssuspension einen Feststoffgehalt von 20 bis 75 Gew.% aufweist, als Farbentwickler Dodecylgallat und als Schmelzhilfsmittel ein Ethylen-bis-fettsäureamid der Formel I,

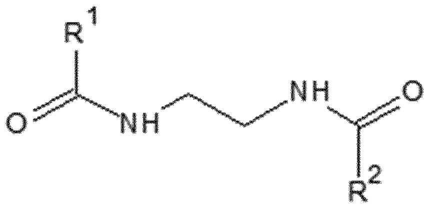

(I),

wobei $R^1$ und $R^2$ $CH_3(CH_2)_mCH_2$ mit m = 13 und/oder 15 sind, enthält, und mit dem Curtain-Coating-Verfahren bei einer Betriebsgeschwindigkeit der Streichanlage von mindestens 400 m/min aufgetragen und getrocknet wird.

**12.** Verfahren nach Anspruch 11,
**dadurch gekennzeichnet, dass**
die Streichanlage mit einer Geschwindigkeit von mindestens 1000 m/min, insbesondere von mindestens 1500 m/min, betrieben wird.

**13.** Verfahren nach mindestens einem der Ansprüche 11 oder 12,
**dadurch gekennzeichnet, dass**
weitere Schichten auf der Thermoreaktionsschicht on-line oder off-line als Schutzschicht und/oder die Bedruckbarkeit begünstigende Schicht ausgebildet werden.

**14.** Verfahren nach mindestens einem der Ansprüche 11 bis 13,
**dadurch gekennzeichnet, dass** weitere Schichten auf die der Thermoreaktionsschicht entgegengesetzten Seite on-line oder off-line als Barriereschicht und/oder die Bedruckbarkeit begünstigende Schicht ausgebildet werden.

## Claims

**1.** A heat-sensitive recording material, comprising a carrier substrate and at least one heat-sensitive thermal reaction layer applied to at least one side of the carrier substrate, which layer contains at least one fluoran colour former, at least one colour developer, at least one melting aid and if applicable usual additives, such as slip additives, stabilisers and/or pigments,
**characterised in that**
the colour developer is dodecyl gallate and the melting aid is an ethylene-bis-fatty acid amide of Formula I,

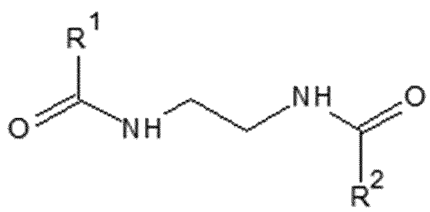

(I),

wherein $R^1$ and $R^2$ are $CH_3(CH_2)_mCH_2$ with m = 13 and/or 15.

**2.** A heat-sensitive recording material according to Claim 1,
**characterised in that**
the content of $C_{16}/C_{16}$-, $C_{16}/C_{18}$-, and $C_{18}/C_{18}$-ethylene-bis-fatty acid amides in total of the ethylene-bis-fatty acid amide of Formula I amounts to at least 80 percent surface area (determined via GC separation and FID detection).

**3.** A heat-sensitive recording material according to one of Claims 1 or 2, **characterised in that**
the at least one fluoran colour former is selected from the group
3-diethylamino-6-methyl-7-anilinofluoran,

3-(N-ethyl-N-p-toluidinamino)-6-methyl-7-anilinofluoran,
3-(N-ethyl-N-isoamylamino)-6-methyl-7-anilinofluoran,
3-diethylamino-6-methyl-7-(o,p-dimethylanilino)fluoran,
3-pyrrolidino-6-methyl-7-anilinofluoran,
3-(cyclohexyl-N-methylamino)-6-methyl-7-anilinofluoran,
3-diethylamino-7-(m-trifluoromethylanilino)fluoran,
3-N-n-dibutylamino-6-methyl-7-anilinofluoran,
3-diethylamino-6-methyl-7-(m-methylanilino)fluoran,
3-N-n-dibutylamino-7-(o-chloroanilino)fluoran,
3-(N-ethyl-N-tetrahydrofurfurylamino)-6-methyl-7-anilinofluoran,
3-(N-methyl-N-propylamino)-6-methyl-7-anilinofluoran,
3-(N-ethyl-N-ethoxypropylamino)-6-methyl-7-anilinofluoran,
3-(N-ethyl-N-isobutylamino)-6-methyl-7-anilinofluoran, and/or
3-dipentylamino-6-methyl-7-anilinofluoran.

4. A heat-sensitive recording material according to at least one of Claims 1 to 3,
**characterised in that**
0.5 to 10 parts by weight dodecyl gallate are used per 1 part by weight fluoran colour former.

5. A heat-sensitive recording material according to at least one of Claims 1 to 4,
**characterised in that**
1.5 to 4 parts by weight dodecyl gallate are used per 1 part by weight fluoran colour former.

6. A heat-sensitive recording material according to at least one of Claims 1 to 5,
**characterised in that**
0.5 to 5 parts by weight ethylene-bis-fatty acid amide of Formula I are used per 1 part by weight dodecyl gallate.

7. A heat-sensitive recording material according to at least one of Claims 1 to 6,
**characterised in that**
the colour developer is present in an amount of from 3 to 35% by weight, relative to the total solids content of the heat-sensitive thermal reaction layer.

8. A heat-sensitive recording material according to at least one of Claims 1 to 7,
**characterised in that**
the stabiliser is used in the form of sterically hindered phenols, preferably 1,1,3-tris-(2-methyl-4-hydroxy-5-cyclohexylphenyl)-butane, 1,1,3-tris-(2-methyl-4-hydroxy-5-tert butylphenyl)-butane, 1,1-bis-(2-methyl-4-hydroxy-5-tert butyl-phenyl)-butane, or in the form of urea-urethane compounds of the general formula III,

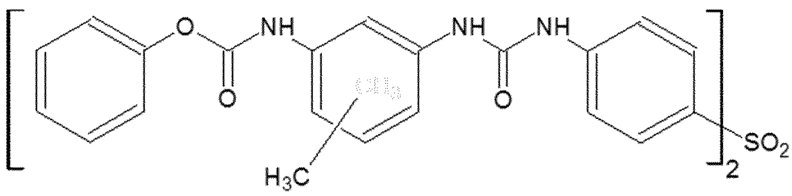
(III)

or oligomeric ethers of the general formula IV,

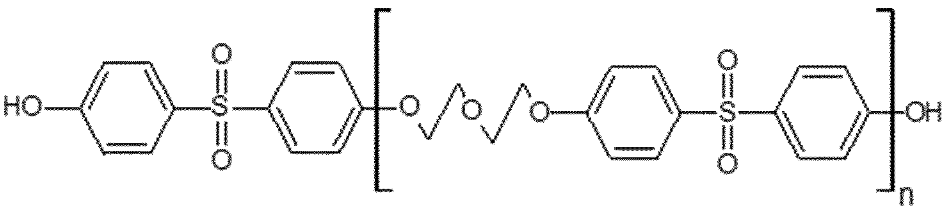
(IV)

where n = 1-3.

**9.** A heat-sensitive recording material according to at least one of Claims 1 to 8, **characterised in that** precipitated calcium carbonate, aluminium hydroxide, kaolins, precipitated silicas in pure form or mixtures thereof are used as pigment.

**10.** A heat-sensitive recording material according to at least one of Claims 1 to 9, **characterised in that** paper, synthetic paper or plastics-material film, optionally with intermediate layers formed thereon, is used as carrier substrate.

**11.** A method for producing a heat-sensitive recording material according to at least one of the preceding claims, **characterised in that** an aqueous application suspension containing the starting materials of a thermal reaction layer which contains at least one fluoran colour former, at least one colour developer, at least one melting aid and if applicable usual additives, such as slip adhesives, stabilisers and/or pigments, is applied to a carrier substrate, optionally with intermediate layers formed thereon, and is dried, the aqueous application suspension having a solids content of 20 to 75% by weight, containing as colour developer dodecyl gallate and as melting aid an ethylene-bis-fatty acid amide of Formula I,

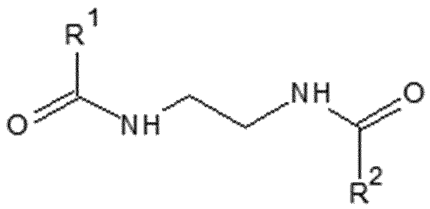
(I),

wherein $R^1$ and $R^2$ are $CH_3(CH_2)_mCH_2$ with m = 13 and/or 15, and being applied using the curtain coating method at an operating speed of the coating plant of at least approximately 400 m/min, and being dried.

**12.** A method according to Claim 11, **characterised in that** the coating plant is operated at a speed of at least 1000 m/min, especially of at least 1500 m/min.

**13.** A method according to at least one of Claims 11 or 12, **characterised in that** further layers are formed on the thermal reaction layer online or offline as a protective layer and/or a layer which promotes printability.

**14.** A method according to at least one of Claims 11 to 13, **characterised in that** further layers are formed on the side opposite the thermal reaction layer online or offline as a barrier layer and/or a layer which promotes printability.

## Revendications

**1.** Matériau d'enregistrement thermosensible, comprenant un substrat de support et au moins une couche de thermoréaction thermosensible appliquée sur au moins un côté du substrat de support, qui contient au moins un agent chromogène à base de fluorane, au moins un révélateur chromogène, au moins un adjuvant de fusion et, le cas échéant, des additifs habituels tels que des agents glissants, des stabilisateurs et/ou des pigments, **caractérisé en ce que** le révélateur chromogène est du gallate de dodécyle et l'adjuvant de fusion est un éthylène-bis-amide d'acide gras de la formule I,

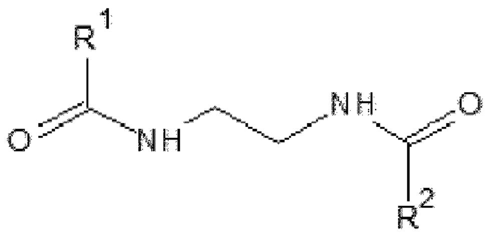

(I),

dans lequel $R^1$ et $R^2$ sont $CH_3(CH_2)_mCH_2$ avec m = 13 et/ou 15.

2. Matériau d'enregistrement thermosensible selon la revendication 1,
**caractérisé en ce que**
la teneur de l'éthylène-bis-amide d'acide gras de la formule I sur des éthylènes-bis-amides d'acide gras en $C_{16}/C_{16}$, $C_{16}/C_{18}$ et $C_{18}/C_{18}$ est égale au total à au moins 80 % en surface, définie au moyen d'une séparation par chromatographie en phase gazeuse (GC) et d'une détection par ionisation de flamme (FID).

3. Matériau d'enregistrement thermosensible selon l'une quelconque des revendications 1 ou 2,
**caractérisé en ce que**
l'au moins un agent chromogène à base de fluorane est choisi parmi le groupe de 3-diéthylamino-6-méthyle-7-anilinofluorane, 3-(N-éthyle-N-p-toluidinamino)-6-méthyle-7-anilinofluorane, 3-(N-éthyle-N-isoamylamino)-6-méthyle-7-anilinofluorane, 3-diéthylamino-6-méthyle-7-(o,p-diméthylanilino)fluorane, 3-pyrrolidino-6-méthyle-7-anilinofluorane, 3-(cyclohexyle-N-méthylamino)-6-méthyle-7-anilinofluorane, 3-diéthylamine-7-(m-trifluorométhylanilino)fluorane, 3-N-n-dibutylamine-6-méthyle-7-anilinofluorane, 3-diéthylamino-6-méthyle-7-(m-méthylanilino)fluorane, 3-N-n-dibutylamine-7-(o-chloroanilino)fluorane, 3-(N-éthyle-N-tétrahydrofurfurylamine)-6-méthyle-7-anilinofluorane, 3-(N-méthyle-N-propylamine)-6-méthyle-7-anilinofluorane, 3-(N-éthyle-éthoxypropylamine)-6-méthyle-7-anilinofluorane, 3-(N-éthyle-N-isobutylamine)-6-méthyle-7-anilinofluorane et/ou
3-dipentylamine-6-méthyle-7-anilinofluorane.

4. Matériau d'enregistrement thermosensible selon au moins l'une quelconque des revendications 1 à 3,
**caractérisé en ce que**
0,5 à 10 parties en poids de gallate de dodécyle sont utilisées pour 1 partie en poids d'agent chromogène à base de fluorane.

5. Matériau d'enregistrement thermosensible selon au moins l'une quelconque des revendications 1 à 4,
**caractérisé en ce que**
1,5 à 4 parties en poids de gallate de dodécyle sont utilisées pour 1 partie en poids d'agent chromogène à base de fluorane.

6. Matériau d'enregistrement thermosensible selon au moins l'une quelconque des revendications 1 à 5,
**caractérisé en ce que**
0,5 à 5 parties en poids d'éhtylène-bis-d'amide d'acide gras de la formule I sont utilisées pour 1 partie en poids de gallate de dodécyle.

7. Matériau d'enregistrement thermosensible selon au moins l'une quelconque des revendications 1 à 6,
**caractérisé en ce que**
le révélateur chromogène est présent en une quantité de 3 à 35 % en poids, par rapport à la teneur totale de solide de la couche de thermoréaction thermosensible.

8. Matériau d'enregistrement thermosensible selon au moins l'une quelconque des revendications 1 à 7,
**caractérisé en ce que**
le stabilisateur est utilisé sous la forme de phénols stériquement encombrés, de préférence de 1,1,3-tris-(2-méthyle-4-hydroxy-5-cyclohexyle-phényle)-butane, 1,1,3-tris(2-méthyle-4-hydroxy-5-tert-butylphényle)-butane, 1,1-bis-(2-méthyle-4-hydroxy-5-tert-butyle-phényle)-butane, ou sous la forme de composés à base d'urée et d'uréthane de la formule générale III,

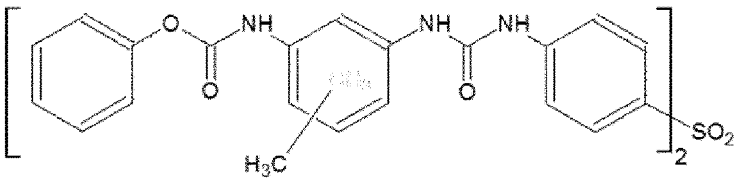

(III)

ou d'éthers oligomères de la formule générale IV,

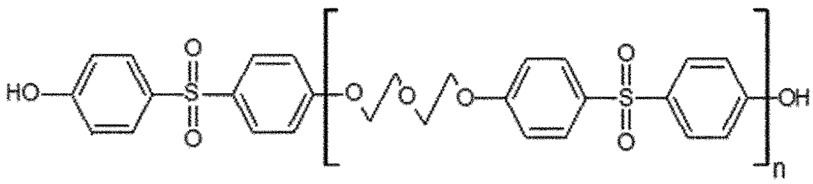

(IV)

avec n = 1-3.

**9.** Matériau d'enregistrement thermosensible selon au moins l'une quelconque des revendications 1 à 8,
**caractérisé en ce que**
sont utilisés en tant que pigment du carbonate de calcium précipité, de l'hydroxyde d'aluminium, des kaolins, des acides siliciques précipités sous une forme pure ou des mélanges de ceux-ci.

**10.** Matériau d'enregistrement thermosensible selon au moins l'une quelconque des revendications 1 à 9,
**caractérisé en ce que**
sont utilisés en tant que substrat de support du papier synthétique ou un film en matière plastique, éventuellement avec des couches intermédiaires réalisées dessus.

**11.** Procédé de fabrication d'un matériau d'enregistrement thermosensible selon au moins l'une quelconque des revendications précédentes,
**caractérisé en ce qu'**est appliquée et séchée sur un substrat de support, éventuellement avec des couches intermédiaires réalisées dessus, une suspension d'application aqueuse contenant les matériaux de départ d'une couche de thermoréaction, qui contient au moins un agent chromogène à base de fluorane, au moins un révélateur chromogène, au moins un adjuvant de fusion, ainsi qu'éventuellement des additifs habituels tels que des agents glissants, des stabilisateurs et/ou des pigments, dans lequel la suspension d'application aqueuse présente une teneur en solide de 20 à 75 % en poids, contient en tant que révélateur chromogène du gallate de dodécyle et en tant qu'adjuvant de fusion un éthylène-bis-amide d'acide gras de la formule I,

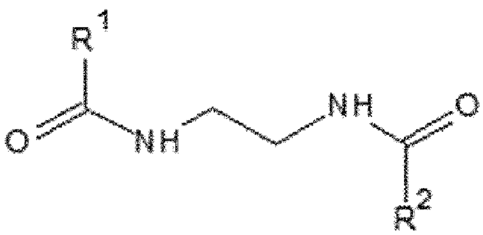

(I),

dans lequel $R^1$ et $R^2$ sont $CH_3(CH_2)_mCH_2$ avec m = 13 et/ou 15, et est appliquée et séchée avec le procédé de couchage en rideau à une vitesse opérationnelle de la coucheuse d'au moins 400 m/min.

**12.** Procédé selon la revendication 11,
**caractérisé en ce que**
la coucheuse fonctionne à une vitesse d'au moins 1 000 m/min, en particulier d'au moins 1 500 m/min.

**13.** Procédé selon au moins l'une quelconque des revendications 11 ou 12,
**caractérisé en ce que**
sont réalisées d'autres couches sur la couche de thermoréaction en ligne ou hors ligne en tant que couche de protection et/ou que couche favorisant l'imprimabilité.

**14.** Procédé selon au moins l'une quelconque des revendications 11 à 13, **caractérisé en ce que** sont réalisées d'autres couches sur le côté opposé à la couche de thermoréaction en ligne ou hors ligne en tant que couche formant barrière et/ou que couche favorisant l'imprimabilité.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 59022795 A
- JP 57176196 A
- JP 60032697 A
- JP 4307290 A
- JP 62261479 A
- JP 4062088 A
- JP 2005088458 A
- EP 2910384 A
- JP 3495138 B
- DE 10196052 T1